# EUROPEAN PATENT APPLICATION

(11) **EP 1 249 508 A1**
(43) Date of publication of application: **16.10.2002**
(21) Application number: 00981785.9
(22) Date of filing: 15.12.2000
(51) Int. Cl.: C22C 1/00, C22C 14/00, C22C 27/06, C22C 30/00, C22F 1/11, C22F 1/18

(54) **HYDROGEN STORAGE ALLOY**

(30) Priority: 17.12.1999 JP 35989999
(71) Applicant: Tohoku Techno Arch Co., Ltd., Sendai-shi, Miyagi 980-0845 (JP); Okada, Masuo, Sendai-shi, Miyagi 982-0807 (JP)
(72) Inventor: SKADA, Masuo, Sendai-shi Miyagi 982-0807 (JP); KURIIWA, Takahiro, Utsunomiya-shi Tochigi 321-0942 (JP); YAMASHITA, Shinichi, Narita-shi Chiba 286-0011 (JP); CHOU, Tsutomu, Chiba-shi Chiba 262-0015 (JP)
(74) Representative: Weber, Dieter, Dr.
(86) International application number: JP0008938
(87) International publication number: WO01044528

(57) **Abstract**

A hydrogen storage alloy having a body-centered cubic structure phase capable of storing and releasing hydrogen as its main phase, and a composition of the general composition formula: Ti_{(100-a-0.4b)}Cr_{(a-0.6b)}V_{(b-c)}M_{c}, wherein 20 ≦ a (at%) ≦ 80, 0 ≦ b (at%) ≦ 10, and 0 ≦ c (at%)<5; and M is at least one element of Mo and W.

## Description

### TECHNICAL FIELD

The present invention relates to a hydrogen storage alloy capable of repeatedly carrying out the absorption and release of hydrogen. Particularly, the present invention relates to a BCC-based hydrogen storage alloy having theoretically a high capacity for hydrogen storage. Further, the present invention especially relates to a hydrogen storage alloy having highly practicable properties, including, for example, not only quantitatively excellent hydrogen adsorption and desorption characteristics within practical pressure ranges and temperature ranges but also a capacity of adsorbing and desorbing hydrogen in quite great amounts per unit weight, together with a relatively inexpensive productivity, etc.

### RELATED ART OF THE INVENTION

At present, there have been fears of not only acid rain due to increasing NOₓ (nitrogen oxides) but also the global warming due to similarly increasing CO₂ in association with an increase in consumption of fossil fuel such as petroleum. Such environmental destruction has become a serious problem. Therefore, our attention has been greatly concentrated on development and practical application of various kinds of clean energy which is friendly to the earth. As a part of this new energy development, practical use of hydrogen energy is given. Hydrogen, which is a constituent element of water inexhaustibly present on the earth, is not only producible by using various kinds of primary energy, but also utilizable as a fluid energy in place of conventionally used petroleum without the risk of destroying the environment because its combustion product is only water. In addition, unlike electric power, it has excellent characteristics such as its relatively easy storage.

In recent years, therefore, investigation has been actively conducted involving hydrogen storage alloys as storage and transport media for hydrogen, and their practical application has been expected. Such hydrogen storage alloys are metals/alloys that can absorb or adsorb, and release hydrogen under an appropriate condition and, by the use of such alloys, it is possible to store hydrogen not only at a lower pressure but also in a higher density as compared to the case of the conventional hydrogen cylinders. In addition, the hydrogen volume density thereof is nearly equal to or rather more than that of liquid or solid hydrogen.

Among these hydrogen storage alloys, AB₅ alloys such as LaNi₅ and AB₂ alloys such as TiMn₂ have been put into practical use until now, but their hydrogen absorbing capacity is still insufficient. Therefore, as proposed, for example in Japanese Unexamined Patent Publication (Kokai) No. 10-110225 (JP, A, 10-110225 (1998)), metals having a body-centered cubic structure (hereinafter referred to as "BCC" or "BCC type") (e.g., V, Nb and Ta), and BCC type alloys thereof (e.g., TiCrV-based alloys, etc.) have been mainly examined in recent years because the number of hydrogen absorbing sites is great and the hydrogen absorbing capacity per unit weight of the alloy is an extremely large value as large as H/M = ca. 2 wherein H is an occluded hydrogen atom and M is a constituent element for the alloy (about 4.0 wt% in case of V with an atomic weight of around 50, etc.).

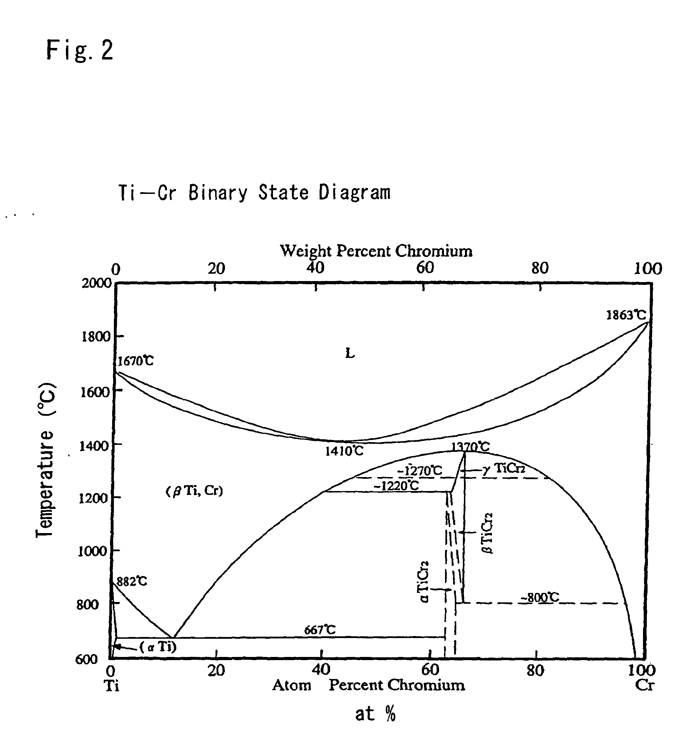

With regard to alloys wherein Ti and Cr are comprised, as suggested in JP, A, 10-110225, when the admixture ratio of the constituent metals in alloys comprised of only Ti and Cr is brought to such an extent that it will be conductible to absorb and release hydrogen at a practicable temperature and pressure (i.e., the atomic ratio of Ti is set at 5 < Ti (at%) < 60), a temperature range for forming a BCC structure becomes very narrow between a melting point of the alloy and a temperature at which a C14 crystal structure is formed as also apparent from FIG. 2 (phase diagram for the Ti-Cr binary alloy). Consequently, other C14 crystal structure phases which are different from BCC are formed at 90 wt% or more in the alloy and it is very difficult to produce the BCC. Therefore, the aforementioned TiCrV-based alloys are products obtained by admixing V as an element highly capable of forming BCC together with both Ti and Cr so as to attain the BCC structure in a more stable fashion and at a lower temperature. It has been reported that it is difficult to form the BCC as their main phase even by application of heat-treatment unless the amount of V is at least 10% or more and as a result no good hydrogen adsorption and desorption characteristics are obtainable.

Further, a Ti-Cr-based alloy (comprised of 5 or more elements) having the formula: Ti_{(100-x-y-z)}CrₓA_{y}B_{z}, wherein A is one member selected from V, Nb, Mo, Ta and W, and B is two or more members selected from Zr, Mn, Fe, Co, Ni and Cu, and its crystalline structure is BCC, is disclosed in Japanese Unexamined Patent Publication (Kokai) No. 7-252560 (JP, A, 7-252560 (1995)), wherein it is pointed out that the aforementioned admixture of 5 or more elements is essential for acquiring the aforementioned BCC.

However, there are still problems: since V to be admixed with the aforementioned alloy has an atomic weight approximately similar to that of Ti or Cr, it may be admixed at an elevated quantity without reducing its hydrogen storage capacity per unit weight of the alloy product so much, but because it is very expensive, especially highly pure one (99.99 % purity) employed for such an alloy is extremely expensive, the price of the alloy product results in a very high level, whereby alloy costs will increase for absorbing and storing an equal amount of hydrogen.
Therefore, for inexpensive alloys free of using precious V, Mo-Ti-Cr-based and W-Ti-Cr-based alloys are proposed wherein Mo or W is admixed as, like V, an element highly capable of forming BCC with both Ti and Cr. However, for these Mo and W, as suggested in Japanese Unexamined Patent Publication (Kokai) No. 10-121180 (JP, A, 10-121 180 (1998)), it has been reported as follows: such alloys are not made into BCC forms even by application of heat-treatments when Mo and/or W is admixed at 0 at%, nor is BCC obtainable as the main phase when Mo and/or W is admixed at a low level, similarly to the above V. Accordingly, no good hydrogen absorption and desorption characteristics will appear. There are also problems: when the amounts of Mo and W to be admixed increase, the hydrogen absorbing capacity per unit weight of such alloys will be reduced because of their large atomic weight, and in case where these hydrogen storage metal alloys are used as energy sources for automobiles, bicycles, etc. in the form of hydrogen gas storage tanks and nickel hydrogen batteries, including fuel batteries, their weights would unavoidably increase when an attempt is made at attaining a necessary electric power and hydrogen-supplying performance.

In view of the foregoing points, the present inventors have paid much attention to the aforementioned problems and, as a result, succeeded in the present invention. An object of the present invention is to provide a hydrogen storage metal alloy which is (i) producible in the aforementioned form having BCC main phases even if the level of precious V, or Mo and W which each lead to a decrease in hydrogen absorbing capacity per unit weight, is made null or as minimal as possible, also (ii) excellent in view of its cost and hydrogen absorbing capacity per unit weight and (iii) highly practicable.

### SUMMARY OF THE INVENTION

In order to solve the aforementioned problems, the . present invention provides a novel hydrogen storage alloy for adsorption, storage and desorption of hydrogen. According to the present invention, the novel hydrogen storage alloy has the following characteristics:
(1) it has as its main phase a body-centered cubic structure-type phase capable of absorbing, storing and releasing hydrogen, and
(2) it has a composition of the following general composition formula:

   Ti_{(100-a-0.4b)}Cr_{(a-0.6b)}V_{(b-c)}M_{c}
wherein 20 ≦ a (at%) ≦ 80, 0 ≦ b (at%) ≦ 10, and 0 ≦ c (at%)<5; and M is at least one element of molybdenum (Mo) and tungsten (W).

Such characteristics lead to the following:

An amount of expensive V contained therein is partially replaced with at least one element selected from the group consisting of Mo and W potently capable of forming a BCC structure together with Ti and Cr in the same manner as V, whereby a decrease in hydrogen storage capacity per unit weight, brought about by the inclusion of Mo or W, can be restricted to a relatively minor one at a relatively low cost.
As a result, advantageously practicable hydrogen storage metal alloys well-balanced between the cost and the hydrogen storage capacity per unit weight can be produced, provided that other elements can be optionally admixed as long as their admixture does not affect greatly the aforementioned properties of the hydrogen storage metal alloys.

It is preferred that the hydrogen storage alloys of the present invention are those wherein an element, X, having an atomic radius larger than that of Cr but smaller than that of Ti may be contained at an atom % concentration, d (at%), ranging within 0 ≦ d (at%) ≦ 20.

As a result thereof, the element X can be admixed the atomic radius of which is larger than that of Cr but smaller than that of Ti, thereby inhibiting the formation of a C14 (Laves phase) structure so as to extend a temperature range for forming a BCC structure phase in place of the aforementioned C14 (Laves phase) structure, with the result that the hydrogen storage metal alloys can be produced with the BCC structure phase in a stable fashion even at low levels of V, Mo and W, which each have a potent BCC structure-forming capability with both Ti and Cr.

It is preferred that the hydrogen storage alloys of the present invention contain at least one or more elements (T) selected from Nb, Ta, Mn, Fe, Al, B, C, Co, Cu, Ga, Ge, Ln (a variety of lanthanoid metals), N, Ni, P, and Si at an atom % concentration, e (at%), ranging within 0 ≦ e (at%) ≦ 10.
As a result thereof, the admixture of T allows controlling appropriately a plateau pressure at which the resultant hydrogen storage metal alloys can absorb, store and release hydrogen.

The selected compositions for hydrogen storage alloys according to the present invention are set forth on the basis of the following reasoning:

FIG. 2 depicts a Ti-Cr binary system phase diagram in connection with the present invention. As seen in FIG. 2, the BCC phase is present throughout all composition ranges in Ti-Cr series at 1643 K (1370 °C) or higher. In light of the atomic radius of Ti (0.147 nm) greater than that of Cr (0.130 nm), when the level of Ti increases and the level of Cr lessens, the alloy will increase its BCC phase lattice constant but lower its plateau pressure. Although the plateau pressure of the hydrogen storage alloy varies depending on the alloy-operating temperature, the ratio of Ti to Cr may vary in order to acquire a desired operating temperature. Therefore, a suitable Ti/Cr ratio can be optionally selected. In embodiments as described herein below, the starting composition is set to the extent of Ti₄₀Cr₆₀ so as to acquire a suitable plateau pressure at 40°C (313K), but this invention is not limited to. The plateau pressure of the hydrogen storage alloys varies depending on their alloy-operating temperature, and the plateau pressure can be controlled in Ti-Cr-M-based hydrogen storage alloys by changing the ratio of Ti to Cr. The plateau pressure is remarkably raised when the Cr level "a" exceeds 80 at% but on the contrary extremely lowered when it is below 20 at%, thereby leading to a poor practicability. Accordingly, the Ti/Cr ratio which is suited for a desired working temperature may be selected within a range of 20 ≦ a(at%) ≦ 80.

Further, since element V has an atomic weight approximately equivalent to that of Ti or Cr though it is expensive, an increase in molecular weight for alloy products can be minimized even if its substitution quantity is increased. Therefore, there is an advantage that an amount of occluded hydrogen per unit weight will not be reduced much. In contrast, since Mo and W each have a great BCC structure-forming property to Ti-Cr binary alloys, the admixture of Mo and/or W with the Ti-Cr binary alloy facilitates the formation of BCC in alloy products. Therefore, Mo and W are effective. However, an excessive amount of admixed Mo and W will lead to the deterioration of hydrogen adsorption and storage characteristics because of heavy elements each having a large atomic weight. Hence, to utilize both the advantages, a novel composition is invented wherein part of expensive V is replaced with Mo and/or W, i.e., an alloy composition of the following fundamental formula:

Ti_{(100-a-0.4b)}Cr_{(a-0.6b)}V_{(b-c)}M_{c}

wherein 20 ≦ a (at%) ≦ 80, 0 ≦ b (at%) ≦ 10, and 0 ≦ c (at%)<5, and M is at least one element of Mo and W, is provided. This composition has a great practicability in cost, hydrogen storage capacity and BCC structure-forming capability. Similarly to the above, the admixture of substituent element T in connection with this composition is also effective in adjusting the plateau pressure wherein T is at least one or more elements selected from the group consisting of Nb, Ta, Mn, Fe, Al, B, C, Co, Cu, Ga, Ge, Ln (various lanthanoid metals), N, Ni, P and Si.

Alloys having a composition with a low level of these elements Mo and W are hardly formed in the structure of BCC as pointed out in the prior art. As apparent from the phase diagram of a Ti-Cr binary alloy (FIG. 2), this is attributable to the fact that a temperature range for affording the BCC structure is too narrow throughout the Ti-Cr admixture ratios wherein temperature and pressure ranges at which the hydrogen storage alloy can work will be within practicable values, i.e., at the Cr level of 20 to 80 at%.
As seen in the aforementioned phase diagram (FIG. 2), however, for example, when the level of Cr is gradually reduced from 60 at% (it has the same meaning as the level of Ti gradually increases from 40 at%), a temperature range eligible for giving a BCC structure would expand. This is presumably attributed to the following: since the Laves phase is represented by a composition of an AB₂ type and the atomic radius ratio of A to B (rA : rB) = about 1.225 : 1 is necessary for forming an ideal geometric structure in such a composition while the atomic radius ratio of Ti to Cr (both of which are used according to the present invention) is 1.13 : 1, which is far different from the above ideal value and unsuitable for forming the ideal Laves phase structure, Ti will quantitatively increase, and invade B sites in apparently more quantities whereby consequently the atomic radius ratio at A sites will become closer to that at B sites, thereby inhibiting the formation of Laves phases.

Now, by developing such ideas, when an element having an atomic radius smaller than that of the A site but larger than that of the B site is admixed therewith for substitution, the formation of Laves phase can be inhibited even if the substituent element invades the A site and also even if the B site is replaced.
Hence, it has been thought that there is a possibility of enabling a BCC formation in alloy products similarly to the above V case as well as the Mo or W case and therefore an element X (its atomic radius is smaller than that at the A site (Ti) but larger than that at the B site (Cr)) can be added to the alloy to expand a temperature range eligible for forming BCC whereby a hydrogen storage alloy may be produced with a BCC structure in a more stable fashion.

The element X having an atomic radius smaller than that at the A site (Ti) but larger than that at the B site (Cr) includes, in addition to the above Mo, W, and V, for example, at least one or more elements selected from the group consisting of Al, Ru, Rh, Pt, Nb, Ta, Sb and others.

### BRIEF DESCRIPTION OF THE DRAWINGS

FIG. 1 is a flow chart illustrating a process for producing the hydrogen storage alloy according to an embodiment of the present invention.
FIG. 2 depicts a Ti-Cr binary system phase diagram.
FIG. 3 is an X-ray diffraction pattern each of as heat-treated (at 1400°C for 1 hour) alloys Ti_{37.5}Cr₆₀V_{2.5} and Ti_{37.5}Cr₆₀Mo_{1.25}V_{1.25}.
FIG. 4 is a graph showing hydrogen absorption and desorption characteristics (at 40°C ) for as heat-treated alloy Ti_{42.5}Cr_{57.5}.
FIG. 5 is an X-ray diffraction pattern of as heat-treated (at 1400 °C for 1 hour) alloy Ti₄₀Cr_{57.5}Al_{2.5}.
FIG. 6 is a graph of hydrogen absorption and desorption characteristics (release curve, 40 °C, 5th cycle) upon application of differential temperature method to alloy VₓTi_{37.5}Cr_{62.5-x.}
FIG. 7 is a graph showing hydrogen absorption and desorption characteristics (at 40°C) for as heat-treated (at 1400°C for 1 hour) alloy VₓTi_{37.5}Cr_{62.5-x}.
FIG. 8 is a graph showing the relationship of admixed amounts of V versus hydrogen absorption and desorption characteristics for a Ti-Cr-V(-Mo) alloy.
FIG. 9 is a graph showing the relationship of admixed amounts of Mo versus hydrogen absorption and desorption characteristics for a Ti-Cr-Mo(-V) alloy.
FIG. 10 is a graph showing hydrogen absorption and desorption characteristics (at 40 °C) for as heat-treated (at 1400°C for 10 min) alloy Ti₃₈Cr₅₄V₅Mo₂Ta₁.
FIG. 11 is a graph showing hydrogen absorption and desorption characteristics (at 40 °C) for as heat-treated (at 1400°C for 10 min) alloys Ti_{37.5}Cr₅₈V_{2.5}W₂ (this invention) and Ti_{37.5}Cr_{51.5}V₅W₆ (Comparative Example).
FIG. 12 is a graph showing hydrogen absorption and desorption characteristics (at 40 °C ) for as heat-treated (at 1400°C for 10 min) alloys Ti_{37.5}Cr₅₇V_{2.5}Mo₁Al₂ and Ti_{37.5}Cr₅₅VsMn_{2.5}.

### PREFERRED EMBODIMENTS FOR EXECUTING THE INVENTION

Described below are the hydrogen storage metal alloys of the present invention and processes for the production of the said metal alloys in detail, relying on experiments conducted by the present inventors.

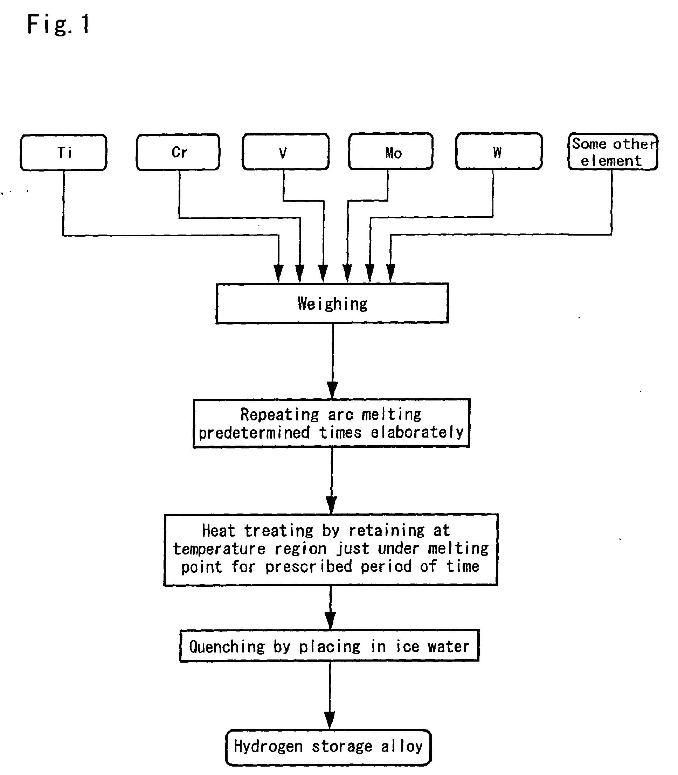

First, FIG. 1 is a flow chart showing a preferred embodiment of the process for producing the hydrogen storage alloys according to the present invention. Such a process is applied to the production of hydrogen storage alloys used in the experiments conducted by the present inventors as described herein below.

In this process for the production of hydrogen storage metal alloys, each constituent metal for an intended hydrogen storage alloy (for example, each of Ti, Cr and V where Ti_{37.5}Cr₆₀V_{2.5} is prepared as a product) is weighed at an amount corresponding to each composition ratio so as to bring the total weight of a resultant ingot to 12.5 g.

Each individual metal thus weighed is placed in an arc melting plant (not depicted), subjected to repeated treatments (melting-stirring ← → solidification) predetermined times (which may vary depending on the number of constituent elements in experiments but be usually approximately 4 to 5 times) in an argon atmosphere of about 40 kPa with scrupulous care to elevate a uniformity and the resultant homogenized ingot is then maintained at a temperature region just lower than the melting point of its melt for a predetermined time to accomplish the heat treatment.

Since a temperature region at which BCC forms are produced is present at an area just below the melting temperature owned by an alloy having a target composition as shown in the above FIG. 2 (phase diagram), the heat-treatment may be preferably effected at such a temperature region at which the BCC is produced and just below the melting temperature. For example, in the aforementioned composition containing about 60 at% of element Cr, the heat-treatment is preferably effected by retaining the molten alloy at about 1400°C. It is also preferable to select a suitable heat-treating temperature from temperature areas at which a target alloy is produced in the form of BCC and just below the melting temperature of the target alloy, depending on its alloy composition. Among temperature areas at which the BCC is produced and just below the melting temperature thereof, it should be noted that it will take a longer time to accomplish the heat-treatment when the treatment temperature is too low (about 1000°C or lower) while it will take only a short time but the heating cost will be increased much when it is too high. Therefore, by taking the foregoing points into account, it is preferable to select a heat-treating temperature.

When a heat-treating time is too short, it will be impossible to accomplish the formation of sufficient BCC structure phases, and when it is too long, not only the heat-treating cost will be increased but also an adverse action will appear whereby heteromorphic phases would be precipitated to deteriorate the hydrogen absorption and desorption characteristics. Accordingly, the operation period can be suitably selected on the basis of a selected heat-treating temperature, but it may be preferably within a range of from 1 min to 1 hour.

In the embodiments, after melting ingots, alloys per se are subjected to the aforementioned heat treatment without making any shapes. Since such a process does not require that cooled alloys are re-heated but allows producing efficiently alloy products having a BCC structure phase, it is preferable but the present invention is not limited to. For example, it may be preferred that molten alloys are shaped once by methods such as strip casting, single rolling and atomizing to afford plates, ribbons or powders, then cooled and the resultant alloys each having either the BCC phase + the Laves phase or the Laves phase alone are subjected to the aforementioned heat treatment so as to give products each having the BCC structure phase as the main phase.

Among these alloys, alloys (ingots) heat-treated to an extent that the BCC structure phase takes place as the main phase are rapidly cooled by dipping into ice water to give alloy products wherein the above BCC structure phase is still retained. In the embodiments, the aforementioned rapid cooling (quenching) is carried out by dipping into ice water, but the present invention is not limited to. Any can be optionally selected for these cooling methods. However, since the volume ratio of BCC structure phase varies depending on cooling rates and a slow cooling rate leads to a decrease in the BCC structure phase volume ratio, it is desired that the alloy is quenched preferably at a cooling rate of 100 K/sec or more.

Although the alloys of the present invention have a composition apt to induce a spinodal decomposition readily, it is defined that, because spinodal decomposing tissues cause deterioration of alloy's hydrogen absorption and desorption characteristics, they are permitted to the extent there is an unavoidable formation.

The aforementioned V has an atomic weight approximately equivalent to that of Ti or Cr. Although V is expensive, a change (increase) in molecular weight for alloy products is minimized even when an amount of substituents increases. Therefore, there are advantages that amounts of occluded hydrogen do not reduce very much. Accordingly, in order to produce BCC mono phase alloys with a high capacity by melting a large amount of alloys followed by rapidly cooling (quenching) and, if necessary, heat-treatments, it is forecasted that V may be effectively admixed therein in combination with at least one member selected from the aforementioned Mo, W, etc. Thus, for the aforementioned low V level Ti-Cr-V alloys, which have been conventionally considered to be hardly produced in a BCC phase form, their efficacies are examined and proved in case where a replacement with Mo partially takes place.

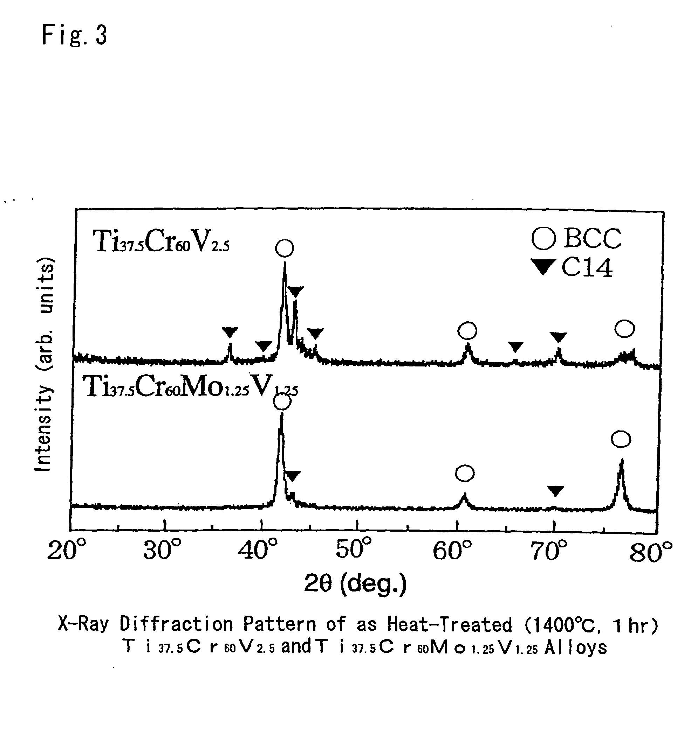

An X-ray diffraction pattern each of as heat-treated Ti_{37.5}Cr₆₀V_{2.5} and Ti_{37.5}Cr₆₀Mo_{1.25}V_{1.25} alloys is shown in FIG. 3. Reflections by the Laves phase are observed for the heat-treated alloy Ti_{37.5}Cr₆₀V_{2.5} as shown in FIG. 3 and the hydrogen adsorption and desorption characteristics remain to an extent of 2.6 %. However, it has been found that the heat-treated alloy Ti_{37.5}Cr₆₀Mo_{1.25}V_{1.25} wherein V is partially replaced with Mo are almost in the form of a BCC mono phase and its hydrogen adsorption and desorption characteristics are improved to be an extent of about 2.7 wt%. In this way, V can be admixed therein in combination with Mo (also W) so as to reduce an amount of expensive V to be admixed together with a reduction in amounts of Mo (and/or W) to be admixed, with the result that the occupied volume ratio of BCC phases will increase together with these admixtures, thereby leading to an increase in hydrogen adsorption capacity. Therefore, it can be said that the admixture of V in combination with Mo (and/or W) is a preferable technique for producing inexpensive hydrogen storage metal alloys with a high capability of absorbing and storing hydrogen.

In the Ti-Cr-based alloys, it is further supposed that the formation of the BCC phase is facilitated more as its structure is more distant from the ideal geometric structure of the Laves phase (TiCr₂) represented by the AB₂ type composition. Accordingly, the BCC phase can be easily formed by the admixture of a readily solid-soluble element effective to avoid the ideal atomic radius ratio 1.225:1 between both the constituent atoms, A and B, for the Laves phase. When the substitution is performed with an element having an atomic radius smaller than the site A but larger than the site B, the substituent element can inhibit the Laves phase formation even if it intrudes into the site A and similarly inhibit the Laves phase formation even if it substitutes the B-site, so that the formation of the BCC type phase will be facilitated. Such elements include, for example, Al, Ru, Rh, Pt, Nb, Ta, Sb and the like, in addition to the above Mo, W and V.

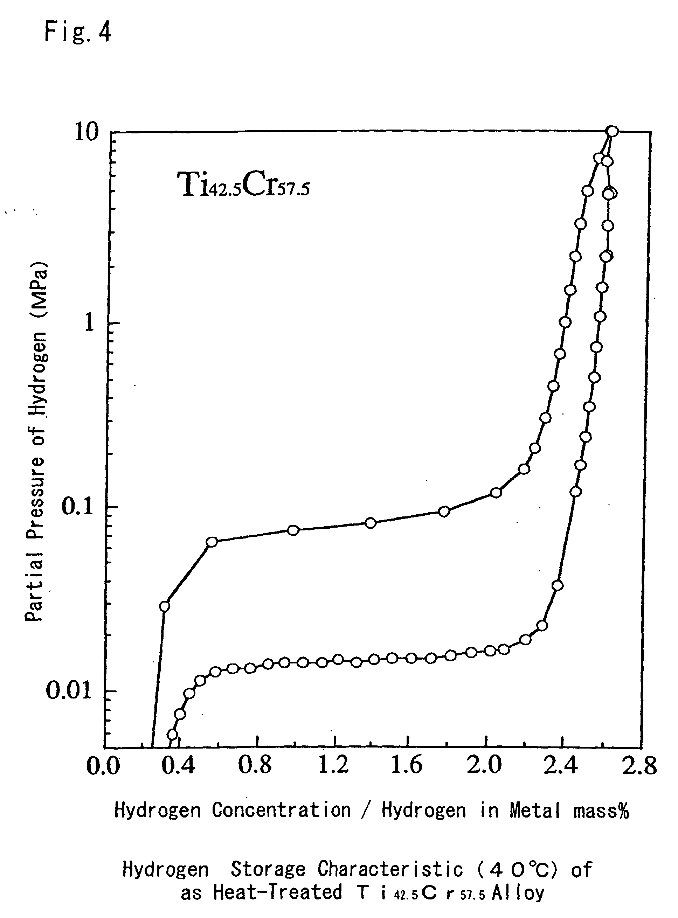

Thus, there has been no report that, in view of such atomic radiuses, the Ti-Cr binary alloy was subjected to the formation of a BCC mono phase or the facilitation of a BCC phase formation. This is one of the grounds for supporting the novelty of the present invention. The hydrogen absorption and desorption characteristics of as heat-treated alloy Ti_{42.5}Cr_{57.5} are shown in FIG. 4. Its hydrogen storage capacity is 2.6 wt % or more. Distinctively from conventional Ti-Cr Laves alloys and the like as reported in the prior art, these results evidence that the BCC phase occurring in the Ti-Cr binary alloy has advantageous hydrogen adsorption and desorption characteristics.

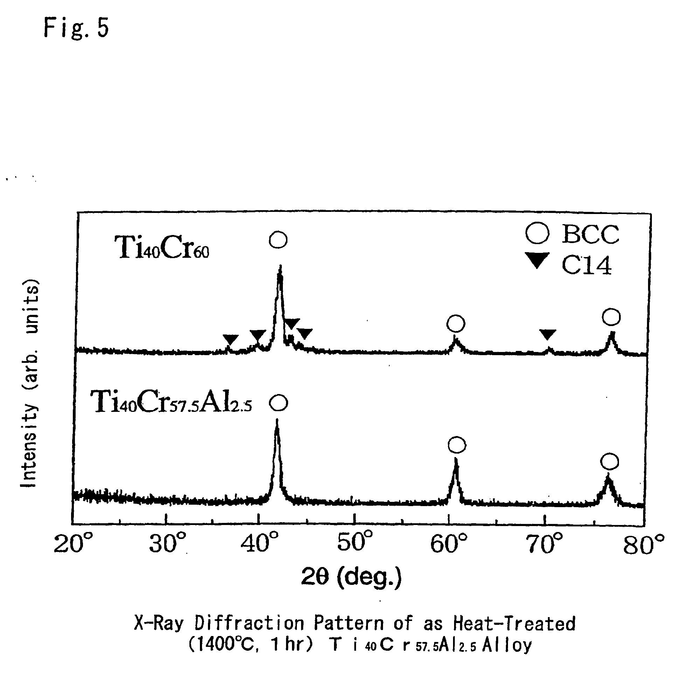

While the BCC type phase appearing in ternary system alloys such as Ti-Cr-V and Ti-Cr-M (M=Mo or W) alloys is intended in JP, A, 10-121180, JP, A, 10-158755 and JP, A, 11-106859, the following has been experimentally proved according to the present invention:
Ti-Cr-V alloys and Ti-Cr-Mo (W) or Ti-Cr-(V or Mo) alloys according to the present invention are produced in the form of a BCC mono phase or in a BCC main phase form at a range substantially close to the Ti-Cr binary alloy wherein an extremely micro amount of V, Mo, W, etc. is admixed, thereby exerting excellent hydrogen adsorption and desorption characteristics. This is attributed to the fact that the BCC phase of such Ti-Cr binary alloys exerts its excellent hydrogen adsorption and desorption characteristics.
An X-ray diffraction pattern of as heat-treated alloys Ti₄₀Cr₆₀ and Ti₄₀Cr_{37.5}Al_{2.5} is shown in FIG. 5. It is apparent that the BCC mono phase is almost formed by replacing part of Cr with Al.

This alloy is realized, by further developing the concept that a preferable Ti-Cr-based alloy is Ti_{42.5}Cr_{57.5} alloy rather than Ti₄₀Cr₆₀ alloy, i.e., Cr is replaced with Ti having a larger atomic radius than Cr to bring the atomic radius ratio of A to B (rA : rB) to such an extent that the Laves phase formation will be easily suppressed as shown in Ti-Cr series, and using Al (0.143 nm) which has an atomic radius larger than Cr (0.130 nm) but smaller than Ti (0.147 nm) and can not only inhibit the formation of a Laves phase but also reversely promote the formation of BCC even irrespective of which of A and B sites is replaced. The additive elements having an action similar to Al include Ru, Rh, Pt, Nb, Ta, Sb and the like, as aforementioned, from the point of atomic radius.

It has been examined and ascertained herein below that the BCC structure phase is produced by the aforementioned production processes and experimental results are also shown which support grounds for selecting the above compositions.

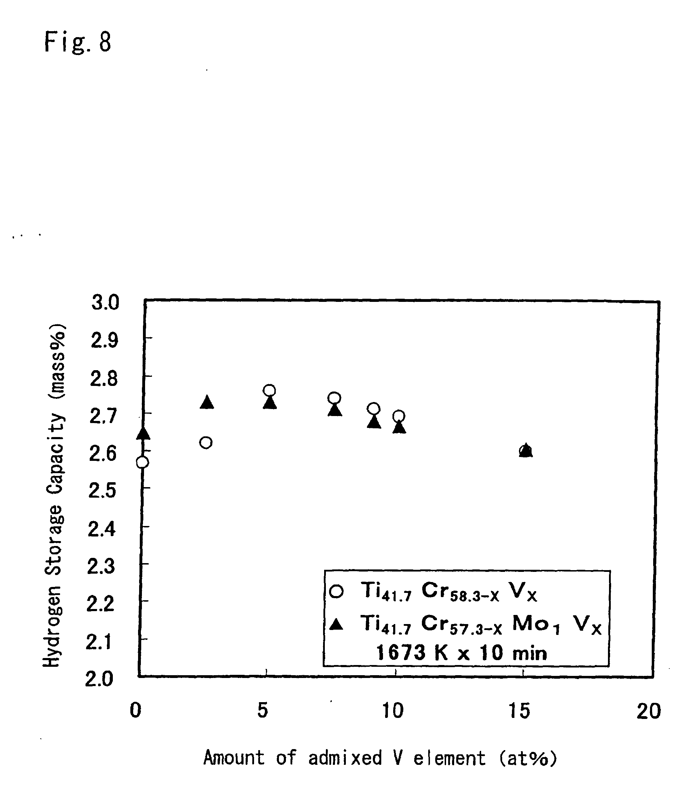

The efficacy of addition of V in combination with Mo to Ti-Cr alloys is examined and verified. The quantitatively additive V-dependent hydrogen storage capacity for Ti_{41.7}Cr_{58.3-x}Vₓ and Ti_{41.7}Cr_{57.3-x}Mo₁Vₓ alloys when measured at 40 °C is shown in FIG. 8. Although the hydrogen storage capacity is reduced and becomes equivalent to that of the V-free composition when the amount of admixed V exceeds 10% in any case, the amount of admixed Mo necessary for providing a large hydrogen storage capacity can be made small in the compositely Mo-added alloy, as compared with the Mo-free alloy. For total amounts of additive Mo and V, a larger hydrogen storage capacity can be advantageously obtained in the compositely added alloy with a small amount of the additives.

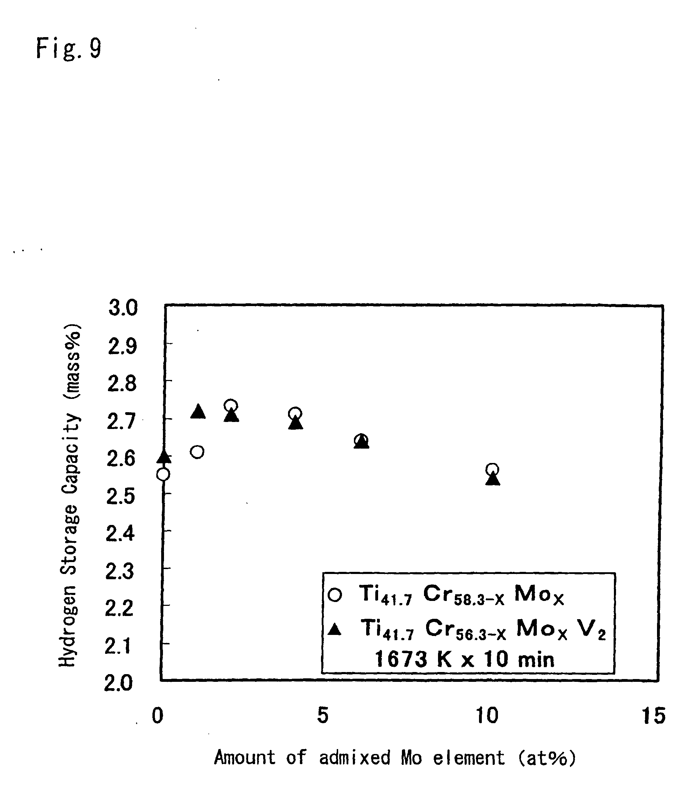

The quantitatively additive Mo-dependent hydrogen storage capacity for Ti_{41.7}Cr_{58.3-x}Moₓ and Ti_{41.7}Cr_{56.3-x}Mo ₓV₂ alloys when measured at 40°C is shown in FIG. 9. The amount of admixed Mo necessary for providing a large hydrogen storage capacity is reduced with addition of V at 2 at%. Mo is highly BCC phase producible and extremely effective in obtaining the BCC type phase. However, when the amount of admixed Mo is increased, Mo is apt to segregate in a melting process because the melting point of Mo is extremely high, i.e., 2610°C, as compared with Ti (melting point=1668°C) and Cr (melting point=1875°C). Thus, the amount of additive Mo can be further minimized by adding a small amount of V (melting point=1890°C) so as to suppress the segregation.

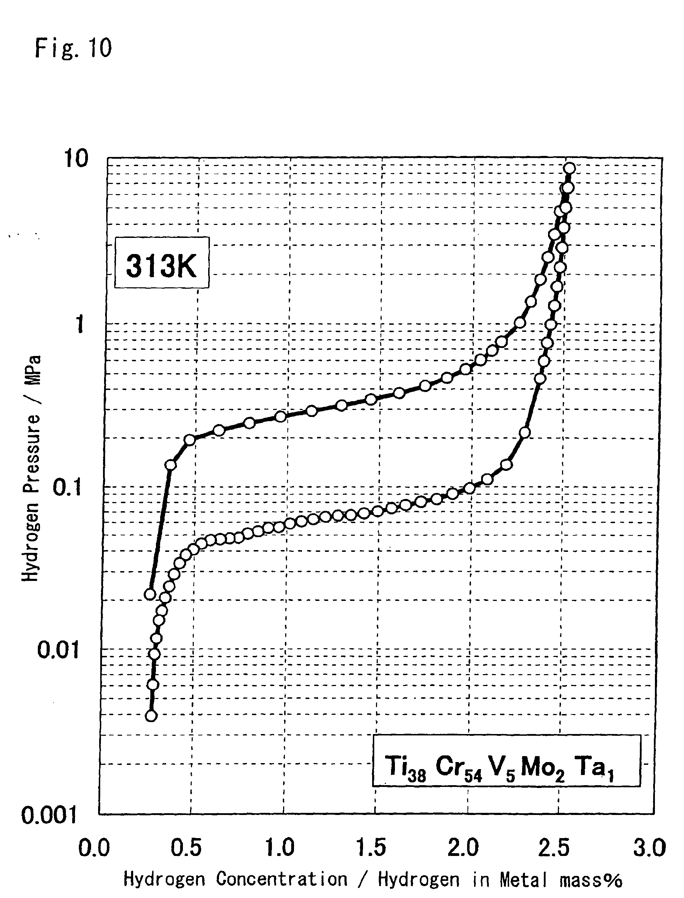

The results where Ta is also compositely added to the Ti-Cr alloys in combination with both V and Mo are shown in FIG. 10. Since Ta is an element having an atomic radius smaller than Ti and larger than Cr, and solid-soluble to any of Cr and Ti, the action of suppressing the formation of the Laves phase via its solid-solution formation in the Ti-Cr-based alloy can be expected. This Ti₃₈Cr₅₄V₅Mo₂Ta₁ alloy is prepared by retaining at 1400 °C for 10 min and immediately quenching in ice water. It has been confirmed from the resultant X-ray diffraction patterns that this Ti₃₈Cr₅₄V₅Mo₂Ta₁ alloy is composed of the BCC single phase. Thus, it is also effective for providing a large hydrogen storage capacity that an element having an atomic radius smaller than Ti and larger than Cr is suitably added to Ti-Cr-V-Mo alloys to suppress the formation of Laves phases.

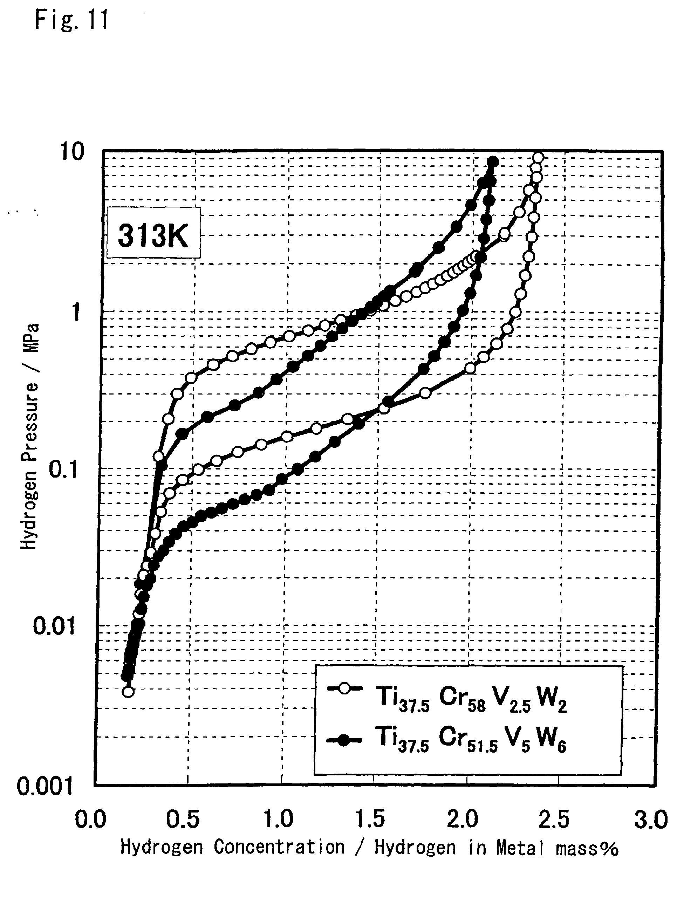

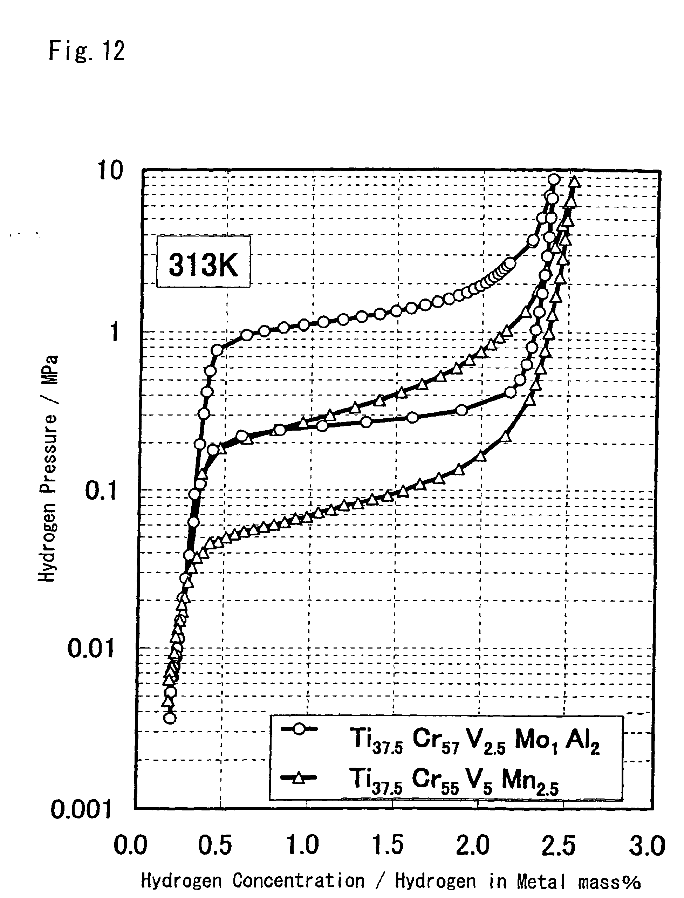

The PCT curves (measured at 40°C) for alloys comprising V and W compositely added to Ti-Cr-based alloys are shown in FIG. 11. It has been confirmed from the resultant X-ray diffraction patterns that each alloy is composed of BCC mono phases. In the alloys with a large amount of additive W (6%, Comparative Example), the hydrogen storage capacity is remarkably deteriorated, as compared with the alloys with an amount of 2% (this invention). Although W is also an alloy having high BCC forming capability similarly to Mo, the amount of admixed W is limited to less than 5% since the hydrogen storage capacity is deteriorated when the amount of admixed W is too large.
Al is an element capable of elevating the plateau pressure via its solid-solution formation in Ti-Cr-based alloys. The resultant PCT curve (measured at 40 °C) for alloys obtained by adding Al to Ti-Cr-V-Mo alloys is shown in FIG. 12. The results for Ti-Cr-V-Mn alloys admixed with Mn instead of Mo are also shown in FIG. 12. Thus, it is also effective in the application of materials that the plateau pressure is changed by adding Al, Mn or the like.

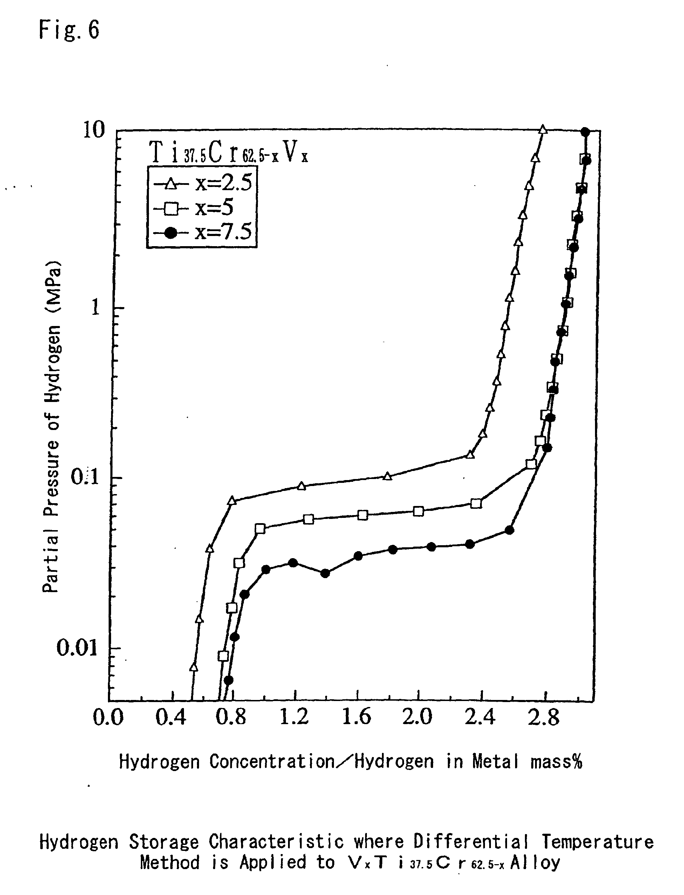

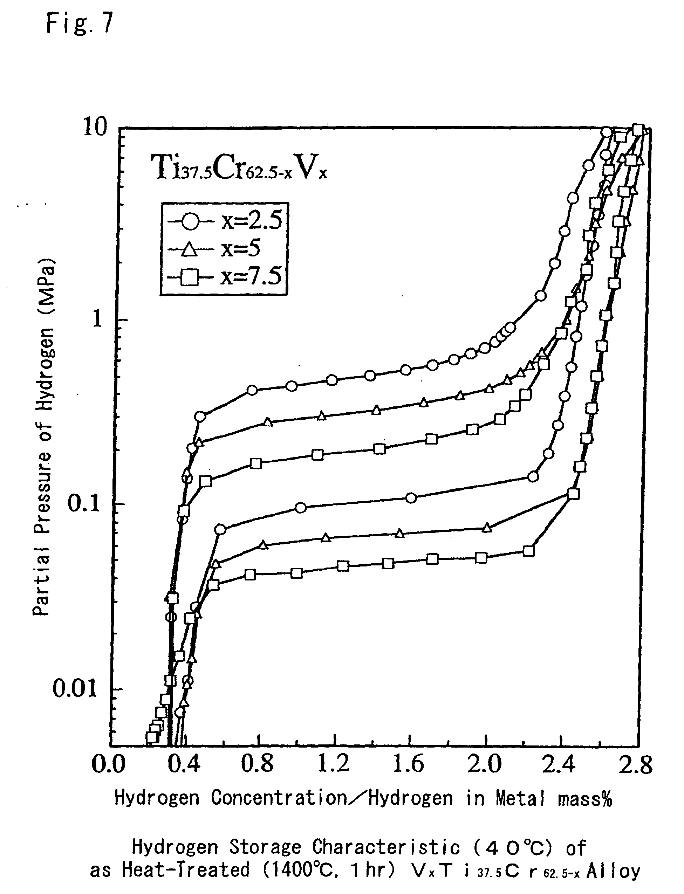

It is reported in Japanese Patent Application No. 11-86866 ((or 86866/1999) that hydrogen can efficiently be utilized via applications of a difference in temperature, characterized by storing hydrogen at a low temperature in body-centered cubic structure hydrogen storage alloys each having a two-stage plateau or inclined plateau and elevating the alloy working temperature to a high temperature for at least a period of hydrogen release process. In case where the differential temperature method is applied to the aforementioned VₓTi_{37.5}Cr_{62.5-x} alloy, its hydrogen absorption and desorption characteristics are shown in FIG. 6. It is apparent that the application of the differential temperature method to the alloys of the present invention will lead to a hydrogen storage capacity of about 3.0 wt %. As compared to FIG. 7, it is observed that the differential temperature method derives an increase in hydrogen storage capacity at about 0.2 wt %, and it is therefore experimentally proved that the differential temperature method is effective for alloys attained by the present invention. Its practicability can also be understood.

## Claims

1. A hydrogen storage alloy having the following characteristics:
(1) it has as its main phase a body-centered cubic structure phase capable of absorbing, storing and releasing hydrogen, and
(2) it has a composition of the following general composition formula:
Ti_{(100-a-0.4b)}Cr_{(a-0.6b)}V_{(b-c)}M_{c}
wherein 20 ≦ a (at%) ≦ 80, 0 ≦ b (at%) ≦ 10, and 0 ≦ c (at%)<5, and M is at least one element selected from molybdenum (Mo) and tungsten (W).

2. The hydrogen storage alloy according to claim 1 which contains an element X having an atomic radius larger than Cr and smaller than Ti at a range of 0 ≦ d (at%) ≦ 20, provided that d is an atom % concentration (at%) of X.

3. The hydrogen storage alloy according to claim 1 or 2 which contains at least one or more elements (T) selected from Nb, Ta, Mn, Fe, Al, B, C, Co, Cu, Ga, Ge, Ln (various lanthanoid metals), N, Ni, P and Si at a range of 0 ≦ e (at%) ≦ 10, provided that e is an atom % concentration (at%) of T.
